# EUROPEAN PATENT APPLICATION

(11) **EP 3 287 939 A1**
(43) Date of publication of application: **28.02.2018**
(21) Application number: 15889762.9
(22) Date of filing: 16.12.2015
(51) Int. Cl.: G06K 9/00

(54) **SECURITY INSPECTION IMAGE DISCRIMINATION SYSTEM AND IMAGE DISCRIMINATION METHOD COMPRISING VIDEO ANALYSIS**

(30) Priority: 21.04.2015 CN 201510190821
(71) Applicant: Nuctech Company Limited, TongFang Building, Shuangqinglu, Haidian District Beijing 100084 (CN)
(72) Inventor: TIAN, Long, Beijing 100084 (CN); HU, Chifeng, Beijing 100084 (CN)
(74) Representative: Delumeau, François Guy
(86) International application number: PCT/CN2015/097606
(87) International publication number: WO 2016/169282

(57) **Abstract**

Disclosed are a security inspection image discrimination system and method comprising video analysis, wherein the security inspection image discrimination system comprises an image acquisition terminal (1), security inspection equipment (2) and an image discrimination terminal (3); the image acquisition terminal (1), the security inspection equipment (2) and the image discrimination terminal (3) are in communicative connection through a network; the image acquisition terminal (1) acquires image information about people subjected to a security inspection and transmitting same to the image discrimination terminal (3); the security inspection equipment (2) performs the security inspection on objects subjected to the security inspection, and acquires security inspection image information about the objects subjected to the security inspection and transmits same to the image discrimination terminal (3); the image discrimination terminal (3) identifies, analyses the image information about people subjected to the security inspection and feeds prompt information back to a user through a display unit of the image discrimination terminal (3); and the image discrimination terminal (3) displays the security inspection image information, the image information about the people subjected to the security inspection and the prompt information. A real-time video on the security inspection equipment (2) is transmitted to the image discrimination terminal (3) through a camera. The user can see the real-time high-definition video in the field of the security inspection equipment (2), and can analyse facial expressions, behaviours and the like of the people subjected to the security inspection with the help of a computer, so that an analysis result is more comprehensive.

## Description

This application is based upon and claims priority to Chinese Patent Application No. 201510190821.0, filed April 21, 2015, the entire contents of which are incorporated herein by reference.

### TECHNICAL FIELD

The present disclosure relates to an image interpretation system and image interpretation method for security inspection containing video analysis, which belong to the field of security inspection technology.

### BACKGROUND

At present, in order to prevent terrorist activities, smuggling and drug trafficking, criminal escape and other incidents severely damaging the social public security, a variety of security inspection devices are provided at important locations, such as the airport, the station, and the harbour. The existing security inspection devices are mainly to check luggage carried by people or to verify an identity, but cannot actively recognize criminals through characteristics of the criminals. In the existing security inspection mode, no matter the security officer uses a local image interpretation mode in the vicinity of the security inspection machine, or a remote image interpretation scheme away from the security inspection machine, only information such as an X-ray image of an article, a counter number, and a passenger name can be seen on a display screen, and the situation of the security scene cannot be fully understood, which leads to a one-sided interpretation of the image.

### SUMMARY

The technical problem to be solved by the present disclosure is how to comprehensively understand the situation of the security scene through the video signal and perform an all-sided image interpretation.

In order to achieve the above object of the present disclosure, the present disclosure provides an image interpretation system and image interpretation method for security inspection containing video analysis.

In one aspect, the present disclosure provides an image interpretation system for security inspection containing video analysis, including an image acquisition terminal, a security inspection device, and an image interpretation terminal;
wherein the image acquisition terminal, the security inspection device and the image interpretation terminal are connected through a network communication; and

the image acquisition terminal collects image information of a person to be security-inspected and transmits the image information to the image interpretation terminal; the security inspection device performs a security inspection on an article to be security-inspected, obtains security inspection image information of the article to be security-inspected, and transmits the security inspection image information to the image interpretation terminal; and the image interpretation terminal identifies and analyzes the image information of the person to be security-inspected, and feeds back prompt information to a user via a display unit of the image interpretation terminal, and the image interpretation terminal displays the security inspection image information, the image information of the person to be security-inspected, and the prompt information.

In an embodiment, the image acquisition terminal includes a behavior image acquisition terminal and/or a face image acquisition terminal.

In an embodiment, the image interpretation terminal further includes a face recognition unit,
the face recognition unit recognizes face information in the image of the person to be security-inspected collected by the image acquisition terminal, performs facial expression recognition, and transmits a result of recognizing an abnormal expression to the display unit.

In an embodiment, the image interpretation terminal further includes a behavior recognition unit,
the behavior recognition unit recognizes behavior information in the image of the person to be security-inspected collected by the image acquisition terminal, and transmits a result of recognizing an abnormal behavior of the person to be security-inspected to the display unit.

In an embodiment, the image information of the person to be security-inspected is collected in real time.

In another aspect, the present disclosure also provides an image interpretation method for security inspection containing video analysis, including:
acquiring image information of a person to be security-inspected;
performing a security inspection on an article to be security-inspected and acquiring security inspection image information of the article to be security-inspected;
recognizing, analyzing and processing the image information of the person to be security-inspected, and feeding back a processing result to a user; and
by combining with the image information of the article to be security-inspected and the processing result, assisting the user to give a prompt whether the current person to be security-inspected and the article to be security-inspected can pass.

In an embodiment, the image information includes a behavior image and a face image.

In an embodiment, the recognizing the image information of the person to be security-inspected includes:
performing a facial expression recognition on face information in the image information of the person to be security-inspected, and transmitting a result of recognizing an abnormal expression to a display unit.

In an embodiment, the analyzing the image information of the person to be security-inspected includes:
recognizing a behavior in the image information of the person to be security-inspected, and transmitting a result of recognizing an abnormal behavior of the person to be security-inspected to a display unit.

In an embodiment, the image information of the person to be security-inspected is collected in real time.

In the image interpretation system and image interpretation method for security inspection containing video analysis provided by the present disclosure, a camera is installed in the vicinity of the security inspection device, and a real-time video on the security inspection device is transmitted to the image interpretation terminal. In this way, the user can not only see the X-ray images generated by the security inspection device, but also see the real-time high definition video of the scene of the security inspection device. Further, the results of intelligent analysis of the face and behavior of the security inspection target can be seen, and the analysis results are more comprehensive.

### BRIEF DESCRIPTION OF THE DRAWINGS

Fig. 1 is a schematic diagram of a structure of an image interpretation system for security inspection according to the present disclosure;
Fig. 2 is a schematic diagram of a structure of a dual-camera image interpretation system for security inspection according to the present disclosure;
Fig. 3 is a schematic diagram illustrating that an image interpretation terminal displays images according to the present disclosure;
Fig. 4 is a schematic diagram illustrating a surprising expression of a person to be security-inspected according to the present disclosure;
Fig. 5 is a schematic diagram illustrating a frightened expression of the person to be security-inspected according to the present disclosure; and
Fig. 6 is a flow chart of an image interpretation method for security inspection according to the present disclosure.

### DETAILED DESCRIPTION

Hereinafter, specific implementing manners of the present disclosure will be described in further detail with reference to the accompanying drawings and embodiments. The following embodiments are intended to illustrate the present disclosure, but are not intended to limit the scope of the present disclosure.

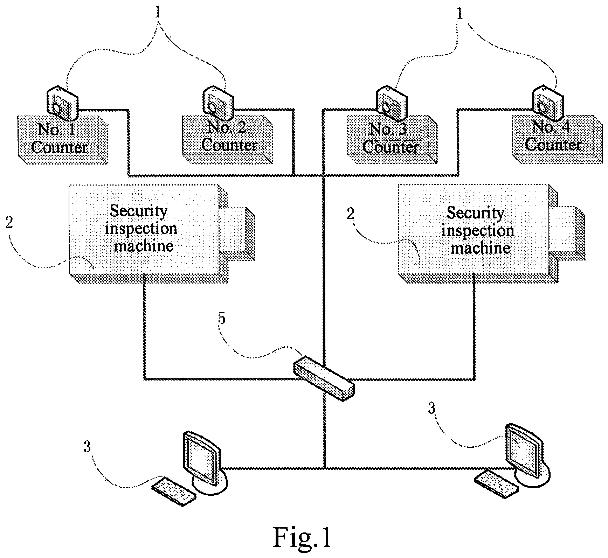

As shown in Fig. 1, the present disclosure provides an image interpretation system for security inspection containing video analysis, which includes an image acquisition terminal 1, a security inspection device 2 and an image interpretation terminal 3. The image acquisition terminal 1, the security inspection device 2 and the image interpretation terminal 3 are connected through a network communication. The image acquisition terminal 1 collects image information of a person to be security-inspected and transmits the image information to the image interpretation terminal 3. The security inspection device 2 performs a security inspection on an article to be security-inspected, obtains security inspection image information of the article to be security-inspected, and transmits the security inspection image information to the image interpretation terminal 3. The image interpretation terminal 3 identifies and analyzes the image information of the person to be security-inspected, and feeds back prompt information to a user via a display unit of the image interpretation terminal 3. The image interpretation terminal 3 displays the security inspection image information, the image information of the person to be security-inspected, and the prompt information. Hereinafter, detailed explanations of the image interpretation system for security inspection containing video analysis provided by the present disclosure will be given.

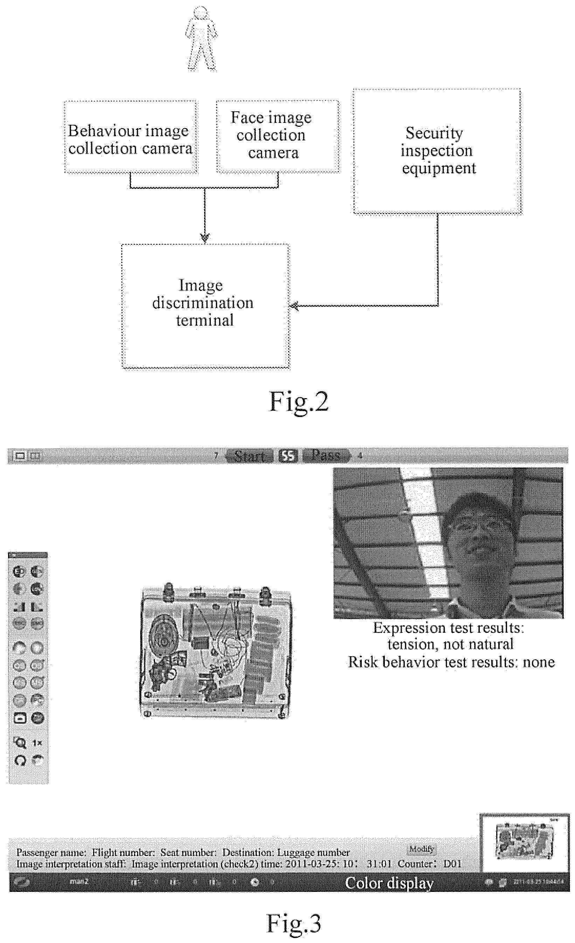

As shown in Fig. 1, when the image acquisition terminal 1 of the image interpretation system for security inspection provided by the present disclosure acquires an image of a person to be security-inspected, one camera may be used to acquire a face detail image of the person to be security-inspected and acquire a behavior image of the person to be security-inspected at the same time. As shown in Fig. 2, in the present disclosure, in order to further improve the efficiency of image acquisition, in an embodiment, two cameras are used, and the two cameras are mounted at different positions and angles so as to collect the face detail image of the person to be security-inspected and the behavior image of the person to be security-inspected. The behavior image acquisition camera collects the behavior image of the person to be security-inspected, and the face image acquisition camera collects the face image of the person to be security-inspected. The behavior image acquisition camera and the face image acquisition camera respectively collect the behavior image of the person to be security-inspected and the face image of the person to be security-inspected in real time. The face image of the person to be security-inspected and the behavior image of the person to be security-inspected are transmitted to the image interpretation terminal 3 in real time and displayed. In the present disclosure, in an embodiment, the image acquisition terminal 1 acquires a high definition video image. The behavior image acquisition camera and the face image acquisition camera may be connected to the same network as the image interpretation unit 3 via a switch 5. As shown in Fig. 3, the image interpretation terminal not only displays the face image of the person to be security-inspected and the behavior image of the person to be security-inspected, but also displays the security inspection image information of the article to be security-inspected and the prompt information.

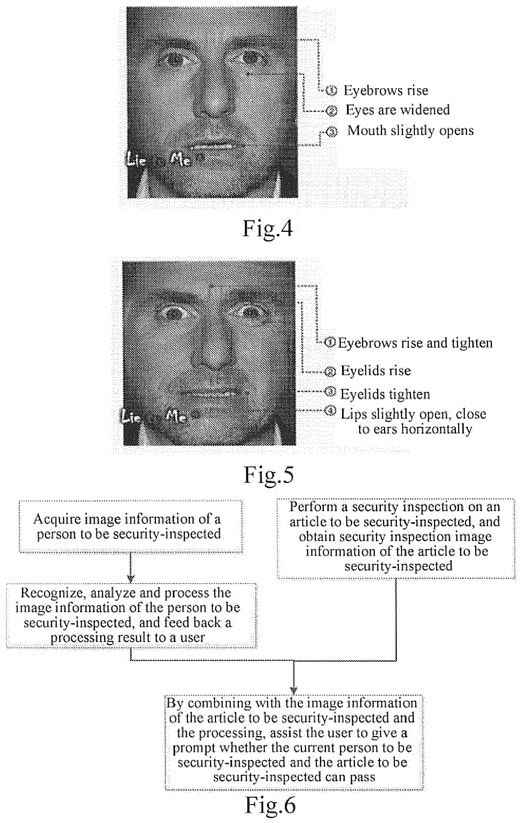

In the present disclosure, the image interpretation terminal further includes a face recognition unit. The face recognition unit recognizes face information in the image of the person to be security-inspected collected by the image acquisition terminal 1, performs a facial expression recognition, and transmits a result of recognizing an abnormal expression to the display unit. The face recognition unit may recognize the facial expression of the face, and recognize the psychological situation of the currently security-inspected person according to the current facial expression. For example, it is to recognize whether the facial expression of the currently security-inspected person is tight or natural. If the facial expression of the currently security-inspected person is stiff, unnatural, and reflects the tension, the currently security-inspected person is suspicious. The user may select to alarm or make a further screening based on the current determination result. Specifically, for example, the face recognition unit identifies facial feature points of the person to be security-inspected in the face image, divides and defines the feature points into eyes, nose, mouth, and forehead, and determines relative distances between these key organs. Through the relationship between the above organs and their distances defined in advance, a corresponding facial expression is determined. As shown in Fig. 4, if the eyebrows of the person to be security-inspected raise, his eyes are widened, and his mouth is opened slightly, then it is determined that the current facial expression is "surprise". As shown in Fig. 5, if the eyebrows of the person to be security-inspected raise, his eyelids raise and tighten, and his mouth is opened slightly, it is determined that the current facial expression is "fear", and so on.

In the present disclosure, the image interpretation terminal further includes a behavior recognition unit. The behavior recognition unit recognizes and analyzes behavior information in the image of the person to be security-inspected collected by the image acquisition terminal, recognizes abnormal behaviors of the person to be security-inspected, and transmits the analyzing result to the display unit. The behavior recognition unit recognizes the behavior information in the image of the person to be security-inspected, and recognizes whether the behavior of the currently security-inspected person is suspicious. For example, it is recognized whether the overall behavior of the currently security-inspected person is tense or natural. If the facial behavior of the currently security-inspected person is very unnatural, reflects panic and looking around, then the currently security-inspected person is suspicious. The user may select to alarm or make a further screening based on the current determination result. Specifically, for example, the behavior recognition unit performs an entire body modeling of the person to be checked, identifies the head, trunk and limbs of the person to be checked, and determines actions of the person based on the relative positions of these key organs, and then determines the behavior, especially suspicious behavior, of the person according to the action sequence. For example, a continuous swing of an upper limb may be deemed as an "abnormal behavior".

In order to further demonstrate the superiority of the image interpretation system for security inspection containing video analysis provided by the present disclosure, the present disclosure also provides an image interpretation method for security inspection applying the above-mentioned image interpretation system for security inspection. As shown in Fig. 6, the method includes the following steps: recognizing, analyzing and processing image information of a person to be security-inspected, and feeding back a processing result to a user; and by combining with the image information of the article to be security-inspected and the processing result, assisting the user to give a prompt whether the current person to be security-inspected and the article to be security-inspected can pass. Hereinafter, the image interpretation method for security inspection containing video analysis provided by the present disclosure will be explained in detail.

When the image acquisition terminal of the image interpretation system for security inspection provided by the present disclosure acquires an image of a person to be security-inspected, one camera or two cameras may be used to acquire a face image of the person to be security-inspected and acquire a behavior image of the person to be security-inspected at the same time. The image acquisition unit acquires, in real time, the face image of the person to be security-inspected and the behavior image of the person to be security-inspected, and transmits the face image and the behavior image to the image interpretation terminal in real time, and the face image and the behavior image are displayed. As shown in Fig. 3, the image interpretation terminal not only displays the face image of the person to be security-inspected and the behavior image of the person to be security-inspected, but also displays the security inspection image information of the article to be security-inspected and the prompt information.

In the present disclosure, the image interpretation terminal further includes a face recognition unit. The face recognition unit recognizes face information in the image information of the person to be security-inspected, performs a facial expression recognition, transmits a result of recognizing an abnormal expression to the display unit, and recognizes the psychological situation of the currently security-inspected person according to the current facial expression. For example, it is to recognize whether the facial expression of the currently security-inspected person is tight or natural. If the facial expression of the currently security-inspected person is stiff, unnatural, and reflects the tension, the currently security-inspected person is suspicious. The user may select to alarm or make a further screening based on the current determination result. Specifically, for example, the face recognition unit identifies facial feature points of the person to be security-inspected in the face image, divides and defines the feature points into eyes, nose, mouth, and forehead, and determines relative distances between these key organs. Through the relationship between the above organs and their distances defined in advance, a corresponding facial expression is determined. As shown in Fig. 4, if the eyebrows of the person to be security-inspected raise, his eyes are widened, and his mouth is opened slightly, then it is determined that the current facial expression is "surprise". As shown in Fig. 5, if the eyebrows of the person to be security-inspected raise, his eyelids raise and tighten, and his mouth is opened slightly, it is determined that the current facial expression is "fear", and so on.

In the present disclosure, the image interpretation terminal further includes a behavior recognition unit. The behavior recognition unit recognizes a behavior in the image information of the person to be security-inspected collected by the image acquisition terminal, and transmits the result of recognizing an abnormal behavior of the person to be security-inspected to the display unit. The behavior recognition unit recognizes the behavior information in the image of the person to be security-inspected, and recognizes whether the behavior of the currently security-inspected person is suspicious. For example, it is recognized whether the overall behavior of the currently security-inspected person is tense or natural. If the facial behavior of the currently security-inspected person is very unnatural, reflects panic and looking around, then the currently security-inspected person is suspicious. The user may select to alarm or make a further screening based on the current determination result. Specifically, for example, the behavior recognition unit performs a whole body modeling of the person to be checked, identifies the head, trunk and limbs of the person to be checked, and determines actions of the person based on the relative positions of these key organs, and then determines the behavior, especially suspicious behavior, of the person according to the action sequence. For example, a continuous swing of an upper limb may be deemed as an "abnormal behavior".

In the image interpretation system and image interpretation method for security inspection containing video analysis provided by the present disclosure, a camera is installed in the vicinity of the security inspection device, and a real-time video on the security inspection device is transmitted to the image interpretation terminal. In this way, the user can not only see the X-ray images generated by the security inspection device, but also see the real-time high definition video of the scene of the security inspection device. Further, the results of intelligent analysis of the face and behavior of the security inspection target can be seen, the image information of the article to be security-inspected and the results of the intelligent analysis are combined, thus the user is assisted to give a prompt whether the current person to be security-inspected and the article to be security-inspected can pass, thereby the analysis results are more comprehensive.

The above embodiments are merely illustrative of the present disclosure and are not to be construed as limiting the disclosure. Various changes and modifications may be made by those skilled in the art without departing from the spirit and scope of the disclosure, and therefore all equivalent technical solutions are also within the scope of the present disclosure, and the scope of patent protection of the present disclosure is defined by the claims.

## Claims

1. An image interpretation system for security inspection containing video analysis, comprising an image acquisition terminal, a security inspection device, and an image interpretation terminal;
wherein the image acquisition terminal, the security inspection device and the image interpretation terminal are connected through a network communication; and
the image acquisition terminal collects image information of a person to be security-inspected and transmits the image information to the image interpretation terminal; the security inspection device performs a security inspection on an article to be security-inspected, obtains security inspection image information of the article to be security-inspected, and transmits the security inspection image information to the image interpretation terminal; and the image interpretation terminal identifies and analyzes the image information of the person to be security-inspected, and feeds back prompt information to a user via a display unit of the image interpretation terminal, and the image interpretation terminal displays the security inspection image information, the image information of the person to be security-inspected, and the prompt information.

2. The image interpretation system for security inspection according to claim 1, wherein the image acquisition terminal comprises a behavior image acquisition terminal and/or a face image acquisition terminal.

3. The image interpretation system for security inspection according to claim 1 or 2, wherein the image interpretation terminal further comprises a face recognition unit,
the face recognition unit recognizes face information in the image of the person to be security-inspected collected by the image acquisition terminal, performs a facial expression recognition, and transmits a result of recognizing an abnormal expression to the display unit.

4. The image interpretation system for security inspection according to claim 1 or 2, wherein the image interpretation terminal further comprises a behavior recognition unit,
the behavior recognition unit recognizes behavior information in the image of the person to be security-inspected collected by the image acquisition terminal, and transmits a result of recognizing an abnormal behavior of the person to be security-inspected to the display unit.

5. The image interpretation system for security inspection according to claim 1, wherein the image information of the person to be security-inspected is collected in real time.

6. An image interpretation method for security inspection containing video analysis, comprising:
acquiring image information of a person to be security-inspected;
performing a security inspection on an article to be security-inspected and acquiring security inspection image information of the article to be security-inspected;
recognizing, analyzing and processing the image information of the person to be security-inspected, and feeding back a processing result to a user; and
by combining with the image information of the article to be security-inspected and the processing result, assisting the user to give a prompt whether the current person to be security-inspected and the article to be security-inspected can pass.

7. The image interpretation method for security inspection according to claim 6, wherein the image information comprises a behavior image and a face image.

8. The image interpretation method for security inspection according to claim 6 or 7, wherein the recognizing the image information of the person to be security-inspected comprises:
performing a facial expression recognition on face information in the image information of the person to be security-inspected, and transmitting a result of recognizing an abnormal expression to a display unit.

9. The image interpretation method for security inspection according to claim 6 or 7, wherein the analyzing the image information of the person to be security-inspected comprises:
recognizing a behavior in the image information of the person to be security-inspected, and transmitting a result of recognizing an abnormal behavior of the person to be security-inspected to a display unit.

10. The image interpretation method for security inspection according to claim 6, wherein the image information of the person to be security-inspected is collected in real time.
